Europäisches Patentamt

European Patent Office

Office européen des brevets

(11) Publication number: **0 405 625 A2**

# EUROPEAN PATENT APPLICATION

(21) Application number: **90200434.0**

(22) Date of filing: **23.02.90**

(51) Int. Cl.5: **B64D 15/00**

(30) Priority: **26.06.89 US 371231**

(43) Date of publication of application:
**02.01.91 Bulletin 91/01**

(84) Designated Contracting States:
**DE FR GB IT NL**

(71) Applicant: **THE BOEING COMPANY**
**P.O. Box 3707 M.S. 6Y-25**
**Seattle WA 98124-2207(US)**

(72) Inventor: **Federow, Harold L.**
**19016 Wallingford N.**
**Seattle, WA 98133(US)**
Inventor: **Silverman, Jeffrey H.**
**924 20th Avenue E.**
**Seattle, WA 98112(US)**

(74) Representative: **Hoijtink, Reinoud et al**
**OCTROOIBUREAU ARNOLD & SIEDSMA**
**Sweelinckplein 1n 1**
**NL-2517 GK Den Haag(NL)**

(54) **Laser ice detector.**

(57) A detector system for detecting the formation of ice on an aircraft outer surface, e.g. wing skin. The ice detector system utilizes a light source, light detector and temperature sensor coupled together for providing signals representative of icing which may be utilized to provide an alarm to the cockpit of the aircraft. Built In Test Equipment (BITE) is also included in the detector system for system failure indication to the pilot of the aircraft.

# LASER ICE DETECTOR

## BACKGROUND OF THE INVENTION

This invention relates to apparatus for detecting the formation of ice on an aircraft surface, and more particularly, to an ice detector system utilizing a light source, a light detector, and a temperature sensor in combination.

## SUMMARY OF THE INVENTION

Prior art ice detector systems represented in the patent literature include U.S. Patent No. 3,540,025 to Levin et al. and e.g. U.S. Patent No. 2,359,787 to Peters et al. The prior art patent to Levin et al. utilizes a prism and a prism heater in contrast to the present system. The Peters et al. patent is similar to the Levin et al. patent but without the prism heater and temperature sensing elements. The present detector system for detecting formation of ice on an aircraft surface does not require a prism and utilizes an infrared laser, and a photodetector in contrast to the prior art systems.

The present invention overcomes the problems of the prior art which require e.g. prism heaters and e.g. prisms by providing a three element detector system which may be utilized in large quantities distributed over various strategic airplane locations. The present detector system may be fabricated in a single chip configuration of minute size and distributed over all critical regions of the aircraft to detect icing in any of the several critical surface areas of the aircraft.

It is accordingly an object of the invention to utilize a light source, a light detector, and temperature sensor in order to detect icing conditions due to the presence of moisture and below freezing temperature conditions.

It is yet another object of the present invention to provide an ice detector system utilizing Built In Test Equipment (BITE).

In accordance with a preferred embodiment of the present invention, a light pulse source is utilized to determine wet conditions through reflection thereof to a photodetector and such information is used in combination with temperature sensing utilizing a thermistor to provide the icing alarm.

## BRIEF DESCRIPTION OF THE DRAWINGS

FIG. 1 is a schematic diagram of the detector system of the present invention in the non-icing condition,

FIG. 2 is representative of the refraction of the light pulse due to the presence of water (either frozen or liquid) on the surface of the aircraft,

FIG. 3 is a schematic diagram of the detector system of FIG. 1 showing Built In Test Equipment (BITE) signal paths for testing the photodetector and the light source,

FIG. 4 is a schematic diagram of the detector system of FIG. 1 showing the light path (105) of the photodetector self test,

FIG. 5 is a schematic diagram of the detector system of FIG. 1 showing the light path (103) of the light source self test, and,

FIG. 6 is a more detailed circuit schematic showing interface circuit electronics of the detector system of FIG. 1.

## DESCRIPTION OF THE PREFERRED EMBODIMENTS

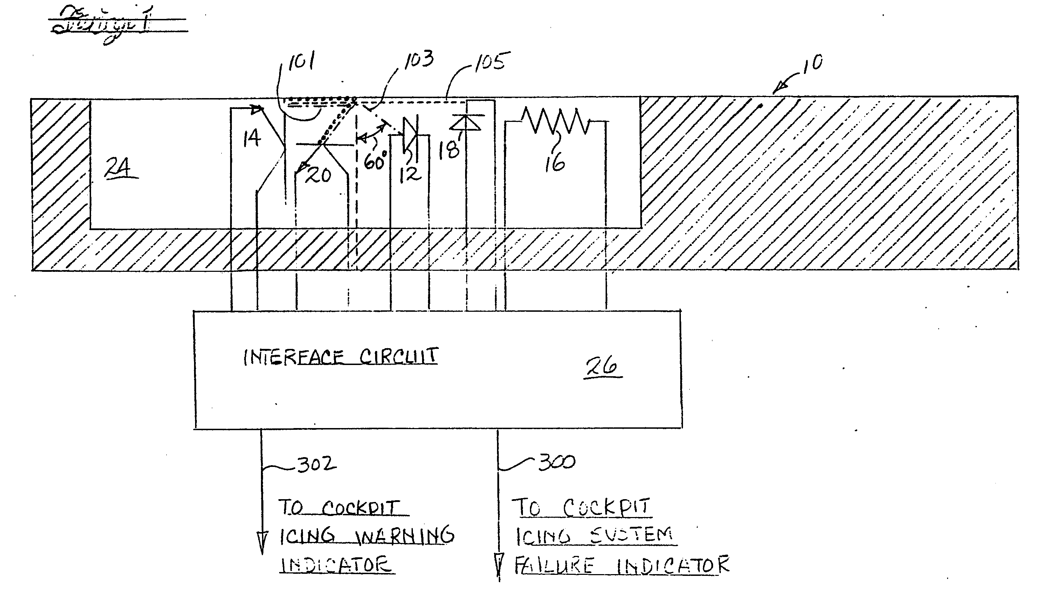

The present detector systems for detecting the formation of ice on an aircraft surface 10 as shown in FIG. 1 includes a detector light source, a photodetector 14, and a thermistor 16 which connect to interface circuit 26. In addition there is a Built In Test Equipment (BITE) light source 18 and a BITE photodetector 20 to verify the detector against failures. The light sources and photodetectors are embedded in an optical plastic or glass 24 which is mounted flush with the surface of the aircraft, which means that the detector has no effect on the aerodynamics of the aircraft. Light source 12 and photodetector 20 are arranged such that light 101 is emitted from light source 12, refracts along the plastic surface 24 and then is detected by the photodetector 14. The angle of the emitted light with respect to the normal to the plastic surface is less than the critical angle for total internal reflection when the surface has water or ice on it; however, it is greater

2

than the critical angle when the surface is adjacent to air. The BITE photodetector 20 is also mounted to receive at this same angle such that light 103 from detector light source 12 is reflected to it. Photodetector 14 also senses light 105 from BITE light source 18 and from the ray that travels along surface 10 in the case of total internal reflection emitted from light source 12.

In the normal mode of operation, detector light source 12 transmits pulses at some arbitrary frequency (for example, 1000 Hz) and BITE light source 18 transmits some other arbitrary frequency (for example, 100 Hz). Detector photodetector 14 receives both of these signals and passes them to analog interface circuit 26. Interface circuit 26 includes filters to detect the two carriers and will assert the discrete signals as appropriate. Interface circuit 26 also contains oscillators to drive the light sources. In addition, interface circuit 26 contains logic to drive BITE light source 18 at the detection frequency to detect failures in the interface circuitry.

When there is no water on the surface 24, the light 101 from light source 12 is totally internally reflected from the air to medium interface 10 to photodetector 14. At the same time, pulses at a different frequency travel along path 105 from the BITE light source 18 to the receiver photodetector 14. Interface circuit 26 detects the two frequencies and shows no ice detected and no failure.

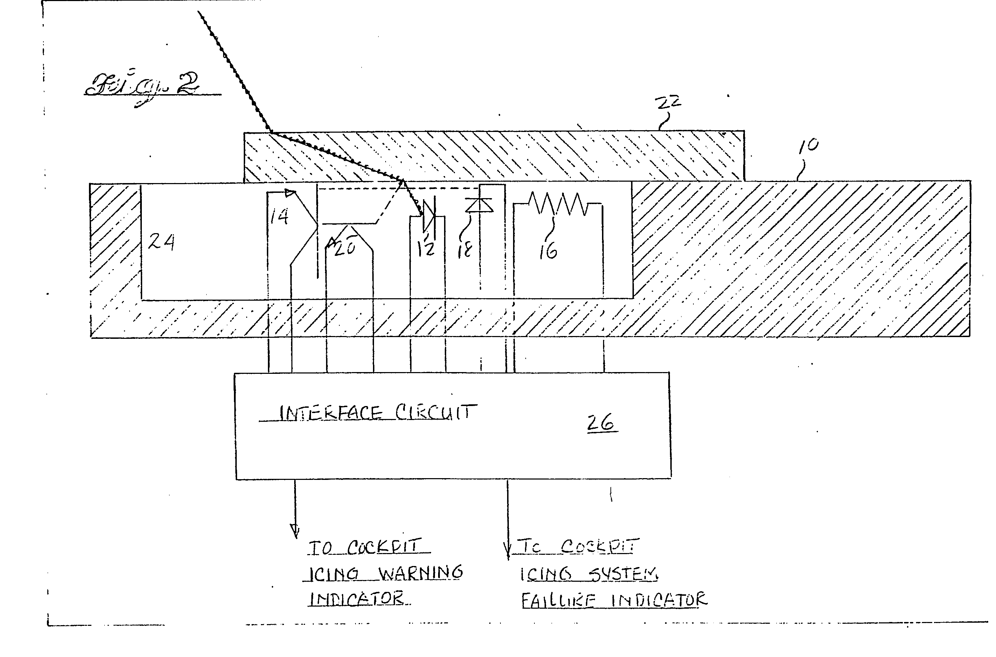

Turning now to FIG. 2, it can be seen that when there is water or ice 22 on the surface, then total internal reflection does not occur. Instead, the signal 101 is refracted outside the surface 10. Photodetector 14 will therefore receive no signal from detector light source 12. However, photodetector 14 still detects BITE signal 105 from the BITE light source 18, and photodetector 20 now detects the detection signal 103 from light source 12. If the BITE signal 105 is detected from photodetector 14 and the detection signal 103 is detected from BITE photodetector 20 then there is moisture on the surface 24 of the aircraft. The thermistor 16 gives the temperature reading to see if the water is ice or liquid.

If the transmitter light source 12 should fail, then photodetector 20 will no longer detect the detection signal 103, although photodetector 14 will detect the BITE signal. Interface circuit 26 will then generate an error indication.

If the photodetector 14 fails, then it will no longer detect BITE signal 105. The interface circuit will then generate an error indication. Note that it is possible to detect failures in interface circuitry 26 by altering the frequency of the light sources under microprocessor control.

The interface circuit 26 can be implemented using an analog to digital converter, an analog multiplexer and a microprocessor. Or, it can be implemented entirely in hardware using threshold detectors, oscillators, pulse stretchers and digital logic.

The use of pulsed light allows the detection circuit to easily differentiate between the detection signal and bright sunlight. The use of infrared light also enhances signal detection because bright sunlight is poor in infrared. However, the invention will work with visible light and with continuous light. For additional separation between sunlight and detection signal, the media 24 may be an optical glass that does not transmit in the visible band. The use of solid state light sources such as Light Emitting Diodes (LEDs) or infrared lasers make the device inexpensive and reliable.

In FIGS. 1, 3, 4, and 5, the angle shown as 60$^\circ$ (degrees) ~ arc sin (1.3/1.5) where 1.3 is the refractive index of water or ice and 1.5 is a typical value of the refractive index of the plastic or glass 24. Actual angle will depend on specific plastic or glass.

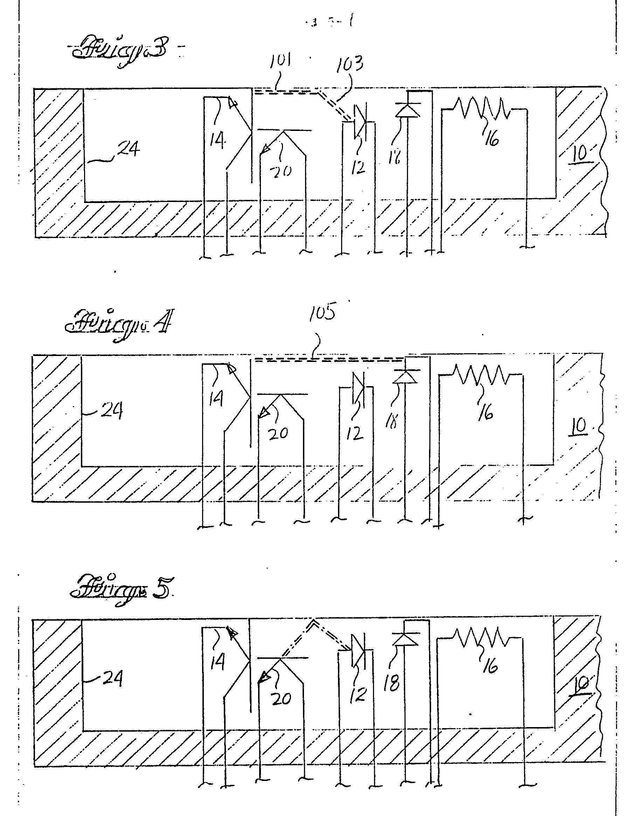

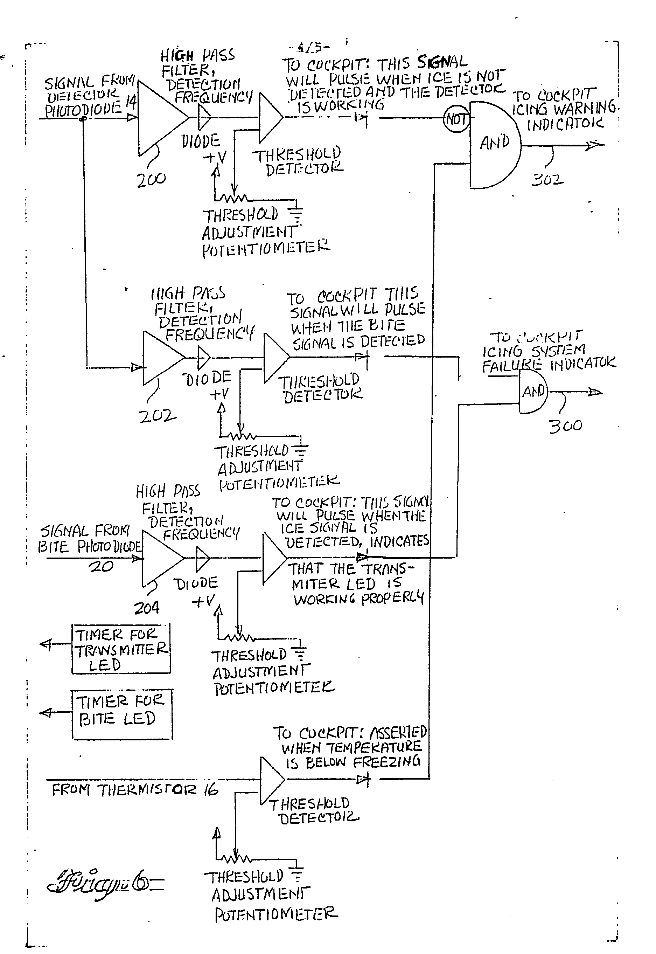

Signal path 101 in FIGS. 1, 2, and more clearly in FIG. 3 is the photodetector signal path. Self test light path 105 for photodetector 14 is shown in FIGS. 1, 2, and more clearly in FIG. 4. If photodetector 14 or its receiver circuit should fail, or if diode 18 or its driver circuit should fail, then photodetector 14 will not detect the BITE signal. If photodetector 14 is detecting the detection signal 101 then light source 12 and photodetector 14 are operative.

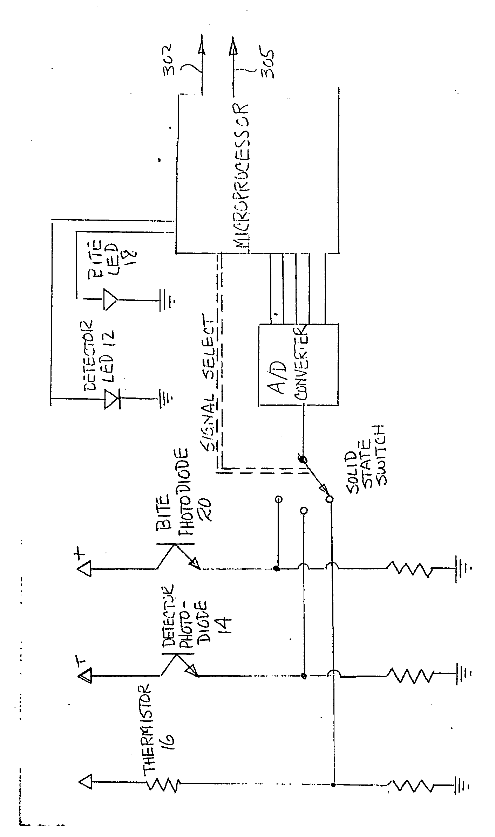

FIG. 5 shows the transmitter built in test signal path 103 only. Light from light source 12 reflects off of the interface and is detected by photodetector 20. If light source 12 or its driver circuit should fail, or if photodetector 20 or its receiver circuit should fail, then the BITE signal will not be detected.

FIG. 6 shows an exemplary interface circuit 26 which includes logic and signal proceeding circuits to provide the cockpit indicator lamp energizations of FIG. 1 for the desired indications.

The Built In Test Equipment (BITE) feature of the present system is advantageous in that no tedious calibration, tuning, or testing is required. Also the system is fail-safe even without the BITE equipment: if either photodetector 14 fails or light source 12 fails, then the system hereinbefore described will assert the icing indication to the cockpit indicator. It should be further noted that this is true even if these devices fail in the "turned on" failure mode since the detector circuit of the system is looking for pulses of light.

Certain further unique features of the present system are described hereinafter, although it should be mentioned that the arrangement of optical elements, the use of pulsed light instead of steady light to avoid interference from the sun and other ambient lighting, and the Built In Test Equipment (BITE) optics ensure fail-safe operation.

The interface circuit 26 may include:

1. A driver circuit (not shown) for the detection light source 12. This circuit, which might be a timer with capacitors and resistors to generate a stream of pulses at a frequency, e.g., 100 Hz.

2. A driver circuit (not shown) for the Built In Test Equipment (BITE) light source 18. This circuit, which is identical to (1) except for component values, generates a stream of pulses at a different frequency, e.g., 2000 Hz.

3. A high pass filter which is couple to the detector photodetector 14 which detects the detection signal. This high pass filter is tuned to the driver (1) above. This high pass filter should reject the BITE signal and also extraneous light sources such as sunlight, airport lights, lightning, etc.

4. A further high pass filter 202 which is coupled to the detector photodetector 14 and which detects the BITE signal. This further high pass filter is tuned to the BITE driver (2) above. This further high pass filter rejects the detection frequency and also extraneous light sources.

5. A third high pass filter which is coupled to the BITE photodetector 20 which detects the detection signal. This third high pass filter is tuned to the detection frequency of the driver (1) above.

6. A threshold detector which compares the signal from themistor 16 and asserts an output if thermistor 16 is sensing below freezing temperatures. The output of threshold detector is a digital signal which may drive cockpit logic directly as desired.

In all cases, the outputs of the high pass filters are rectified by the diodes shown downstream and then threshold detected. The output of threshold detector is a stream of pulses. External logic can either wait for the pulse to arrive and generate an alarm condition if a timeout occurs, or the outputs may be combined with simple combinatorial logic as shown on the right side of FIG. 6 of exemplary interface circuit 26 to generate the outputs 300 and 302 for pilot recognition.

While a preferred analog embodiment of the system has been described, an alternative interface circuit 26 for cost effectiveness might consist of coupling the outputs of photodetectors 14 and 20 and thermistor 16 through an analog to digital (A/D) converter as shown in FIG. 7 with the resulting digital data processed in a microcomputer which would be also capable of interfacing with a data network.

The following sample computer program code in "Ada" programming language might be utilized for the microprocessor shown in the system of FIG. 7:

```
with ADC_PACKAGE; use ADC_PACKAGE;
procedure ICING_DETECTOR_ALGORITHM is
-- thresholds
     ICING_THRESHOLD : constant := {static_expression};
     FREEZING_THRESHOLD : constant := {static_expression};
     TRANSMITTER_LED_OKAY_THRESHOLD : constant :=
     {static_expression};


-- internal discretes
     type ADC_INPUTS is (SIGNAL_PHOTODIODE, BITE_PHOTODIODE,
     THERMISTOR);
     WATER_DETECTED, FREEZING, TRANSMITTER_LED_OKAY,
     RECEIVER_PHOTODIODE_OKAY : BOOLEAN;


-- external discretes
     ICING, DETECTOR_OKAY : BOOLEAN := FALSE;


begin
     INITIALIZE;
     loop
          RECEIVER_PHOTODIODE_OKAY := FALSE
          TRANSMITTER_LED_OKAY := FALSE; -- assume bad LED
          for now
-- First, do the regular icing detection
          ADC_SELECT (ADC_INPUT => SIGNAL_PHOTODIODE);
          TRANSMITTER_LED ( OFF );
          READ_ADC ( DARK_CURRENT );
          TRANSMITTER_LED ( ON );
          READ_ADC ( LIGHT_CURRENT );
          if LIGHT_CURRENT - DARK_CURRENT > ICING_THRESHOLD
          then WATER_DETECTED := FALSE;
          TRANSMITTER_LED_OKAY := TRUE;
          RECEIVER_PHOTODIODE_OKAY := TRUE;
     else
          WATER_DETECTED := TRUE;
     end if;
```

5

```
        TRANSMITTER_LED ( OFF );


-- Now, test the transmitter LED using the BITE photodiode.
-- If we know that transmitter LED is okay
        if not TRANSMITTER_LED_OKAY then
                ADC_SELECT (ADC_INPUT =>BITE_PHOTODIODE);
                TRANSMITTER_LED ( OFF );
                READ_ADC ( DARK_CURRENT );
                TRANSMITTER_LED ( ON );
                READ_ADC ( LIGHT_CURRENT );
                TRANSMITTER_LED_OKAY := LIGHT_CURRENT -
                DARK_CURRENT >
                        TRANSMITTER_LED_OKAY_THRESHOLD ;
                TRANSMITTER_LED ( OFF );
        end if;
        if not RECEIVER_PHOTODIODE_OKAY then


-- now, test the signal photodiode using the BITE LED
        ADC_SELECT ( ADC_INPUT => BITE_PHOTODIODE );
        BITE_LED ( OFF );
        READ_ADC ( DARK_CURRENT );
        BITE_LED ( ON );
        READ_ADC ( LIGHT_CURRENT );
        RECEIVER_PHOTODIODE_OKAY := LIGHT_CURRENT - DARK_CURRENT
                        > RECEIVER_PHOTODIODE_OKAY_THRESHOLD ;
        BITE_LED ( OFF );
        end if;


-- Now, test the temperature
        ADC_SELECT (ADC_INPUT => THERMISTOR);
        READ_ADC (THERMISTOR_CURRENT);
        FREEZING := THERMISTOR_CURRENT < FREEZING_THRESHOLD;


-- Do the cockpit indicators
                ICING := WATER_DETECTED and FREEZING;
                DETECTOR__OKAY  :=  RECEIVER__PHOTODIODE__OKAY  and
                TRANSMITTER_LED_OKAY; end loop;
        end ICING_DETECTOR_ALGORITHM;
```

**Claims**

1. An ice detector system for an aircraft outer surface comprising in combination:

a light source and light sensing means disposed in said aircraft outer surface so that light produced by said light source is reflected by moisture on said aircraft outer surface into said light sensing means for providing a first output signal;

temperature sensing means disposed in said aircraft outer surface for providing a second output signal when said moisture on said aircraft outer surface is equal to or less than 32 degrees F.; and

said first and second output signals providing an alarm signal to the cockpit of the aircraft.

2. The invention according to claim 1 wherein said light source comprises a semiconductor infrared laser, said light sensing means comprises an infrared photodetector, and said temperature sensing means comprises a thermistor.

3. An ice detector system for detecting the formation of ice on an aircraft outer surface comprising:

first and second infrared lasers having first and second terminals;

first and second infrared photodetectors having first and second terminals; and,

a thermistor having first and second terminals;

said interface circuit means coupled to said first and second terminals of said first and second infrared lasers, said first and second terminals of said first and second infrared photodetectors and said first and second terminals of said thermistor for providing a cockpit output signal representative of icing warning and a cockpit signal representative of ice detector system failure.

4. A method of detecting ice formation on the wing skin of an aircraft comprising:

positioning a first light source (12), a first photodetector (14), a second light emitting diode (18), and a second photodetector (20) in an optical insert (24) embedded in the surface ot an aircraft wing skin; and,

said second photodetector (14) further positioned to receive signals from said first light emitting diode (12) and said second light emitting diode (18) in the absence of ice (22) on the exposed surface of said optical insert (24) and coupling said signals from said first light emitting diode (12) and said second light emitting diode (18) to an analog interface circuit (26).

5. The method according to claim 4 including the further step of:

causing ice (22) to be deposited on the exposed surface of said optical insert (24) so that said first photodetector (14) no longer receives signals from said first light emitting diode (12).

6. A fail-safe ice detector system for an aircraft outer surface comprising in combination:

a detector photodetector 14;

a BITE photodetector 20;

a high pass filter, diode, and threshold detector coupled in series circuit with said detector photodetector 14 for providing a pulse signal when ice is NOT detected and said detector is functional;

a high pass filter, diode, and threshold detector coupled in series circuit with said detector photodetector 14 for providing a cockpit pulse signal upon detection of a BITE signal; and,

a high pass signal, diode, and threshold detector coupled in series circuit with said BITE photodetector 20 for providing a cockpit pulse signal upon ice detection.

Fig. 1

101   103   105   10

14   20   60°   12   18   16   24

INTERFACE CIRCUIT   26

302   300

TO COCKPIT
ICING WARNING
INDICATOR

TO COCKPIT
ICING SYSTEM
FAILURE INDICATOR

EP 0 405 625 A2

Fig. 2

INTERFACE CIRCUIT

TO COCKPIT ICING WARNING INDICATOR.

To COCKPIT ICING SYSTEM FAILURE INDICATOR

10

22

16

18

12

20

14

24

26

Fig. 3

Fig. 4

Fig. 5

HIGH PASS FILTER, DETECTION FREQUENCY

SIGNAL FROM DETECTOR PHOTODIODE 14

-4/5-

TO COCKPIT: THIS SIGNAL WILL PULSE WHEN ICE IS NOT DETECTED AND THE DETECTOR IS WORKING

TO COCKPIT ICING WARNING INDICATOR

NOT

AND

302

DIODE +V

200

THRESHOLD DETECTOR

THRESHOLD ADJUSTMENT POTENTIOMETER

HIGH PASS FILTER, DETECTION FREQUENCY

TO COCKPIT: THIS SIGNAL WILL PULSE WHEN THE BITE SIGNAL IS DETECTED

TO COCKPIT ICING SYSTEM FAILURE INDICATOR

AND

300

DIODE +V

202

THRESHOLD DETECTOR

THRESHOLD ADJUSTMENT POTENTIOMETER

HIGH PASS FILTER, DETECTION FREQUENCY

SIGNAL FROM BITE PHOTODIODE 20

TO COCKPIT: THIS SIGNAL WILL PULSE WHEN THE ICE SIGNAL IS DETECTED, INDICATES THAT THE TRANS- MITER LED IS WORKING PROPERLY

DIODE +V

204

TIMER FOR TRANSMITTER LED

THRESHOLD ADJUSTMENT POTENTIOMETER

TIMER FOR BITE LED

TO COCKPIT: ASSERTED WHEN TEMPERATURE IS BELOW FREEZING

FROM THERMISTOR 16

THRESHOLD DETECTOR

Figure 6

THRESHOLD ADJUSTMENT POTENTIOMETER

11

EP 0 405 625 A2

THERMISTOR 16

T

DETECTOR PHOTO-DIODE 14

+

BITE PHOTODIODE 20

DETECTOR LED 12

BITE LED 18

SIGNAL SELECT

MICROPROCESSOR

A/D CONVERTER

SOLID STATE SWITCH

302

305

Fig 7